# EUROPEAN PATENT APPLICATION

(11) **EP 1 826 661 A2**
(43) Date of publication of application: **29.08.2007**
(21) Application number: 07102220.6
(22) Date of filing: 13.02.2007
(51) Int. Cl.: G06F 3/048

(54) **Method and device for providing option menus using graphical user interface**

(30) Priority: 24.02.2006 KR 20060018134
(71) Applicant: Samsung Electronics Co., Ltd., Suwon-si, Gyeonggi-Do (KR)
(72) Inventor: Hwang, Jae Joon, Seoul (KR); Lee, Bong Won, Seoul (KR)
(74) Representative: Grünecker, Kinkeldey, Stockmair & Schwanhäusser Anwaltssozietät

(57) **Abstract**

A method and apparatus for proving option menus of the portable device using a graphic user interface (GUI) is disclosed. The method graphic includes displaying a menu having at least one menu item according to a menu request signal, determining if at least one submenu is associated with the menu item, and simultaneously displaying the menu and the submenu if the menu item is associated with the submenu. Because the portable phone provides shortcut paths to specific menu items for activating various functions, utilization of the portable phone is simplified in a user-friendly manner resulting in the user finding the menu path quicker.

## Description

The present invention relates to a portable device and, in particular, to a method and apparatus for providing option menus of the portable device using a graphic user interface (GUI).

As portable communication devices have gained widespread acceptance as an efficient means of voice and data communications, the market for mobile wireless is increasing by leaps and bounds.

Recently, the portable devices, e.g., the mobile phones are implemented with additional functions for supporting wireless Internet access, Short Message Service (SMS), on-demand multimedia services, etc. As the portable devices are implemented for multipurpose, the menu structure for operating the portable devices become complicated.

Such portable devices have graphic user interfaces (GUIs) which allow the users to execute commands by selecting a choice from menus.

Typically, a GUI is designed such that the menus are displayed as text bars or icons linked in a tree structure and the menus belonged to the same level are displayed simultaneously.

Accordingly, in order for the user to execute a specific command, the user would have to know the different "function trees".

For example, in order for the user to retrieve pictures previously taken by a portable phone equipped with a camera module, the user enters the camera mode to see a camera function-related main menu which list several submenu items, through a key manipulation. While the main menu is displayed, the user selects a picture retrieval item such that the portable device displays the picture retrieval screen on the display. Accordingly, the user can retrieve the target picture through the picture retrieval screen with keypad manipulation.

However, the conventional GUI-based menu display method requires stepwise menu selections, i.e., the user should first open a main menu of a specific function to select a command item belonging to a submenu of the main menu, resulting in burdensome and inconvenient keypad manipulation.

The present invention is designed to solve the above problems. It is the object of the present invention to provide a graphic user interface for a portable device resulting in improved user manipulation convenience.

This object is solved by the subject matter of the independent claims. Preferred embodiments are defined in the dependent claims.

It is an aspect of the present invention to provide a method and system for providing options menus with a graphic user interface for a portable device, which is capable of simplifying menu handling using a roll-up window.

It is another aspect of the present invention to provide a method and system for providing option menus with a graphic user interface for a portable device, which is capable of providing shortcuts for operation features.

In one aspect of the present invention, the above and other objects are accomplished by a method for providing graphic user interface menus for a portable device. The method includes displaying a menu having at least one menu item according to a menu request signal, determining if at least one submenu is associated with the menu item, and displaying the menu and the submenu at the same time if the menu item is associated with the submenu.

Preferably, the submenus are displayed in a separate window and the method further includes determining if an inter-item movement signal is entered while the menu and the submenu are displayed and moving to and highlighting a menu item of the menu if the inter-item movement signal is entered.

Preferably, the method further includes determining if an inter-menu movement signal is entered while the menu and the submenu are displayed and moving to the submenu if the inter-menu movement signal is entered.

Preferably, the method further includes determining if an inter-menu movement signal is entered while the menu and the submenu are displayed and moving to the submenu and highlighting a submenu item of the submenu.

Preferably, the method further includes determining if there is at least one low level submenu associated with the submenu item and displaying the submenu and the low level submenu at the same time if at least one low level submenu associated with the submenu item exists.

In another aspect of the present invention, the above and other objects are accomplished by a method for providing graphic user interface menu for a portable device. The method includes the steps of determining if a menu request signal is entered, displaying a menu having at least one menu item if the menu request signal is detected, determining if an item selection signal is entered, highlighting a menu item on which a cursor is overlaid, determining whether there is at least one submenu associated with the highlighted menu item if the item selection signal is detected, displaying the menu and the submenu at the same time if there is at least one submenu associated with the highlighted menu item, determining if a submenu item selection signal is entered for selecting a submenu item, and operating a function associated with the selected submenu item if the submenu item selection signal is detected.

In still another aspect of the present invention, the above and other objects are accomplished by a portable device incorporating graphic user interface menu for enhanced accessibility. The device includes a controller which controls paths through which menus are transmitted, a display unit which displays the menus such that a submenu is overlapped on a main menu, and a user interface processing unit which checks a menu requested by the user, retrieves submenus associated with the menu and relevant information and applications, and simultaneously provides the menu and submenus to the display unit.

The accompanying drawings, which are included to provide further understanding of the invention and are incorporated in and constitute a part of this application, illustrate embodiment(s) of the invention and together with the description serve to explain the principle of the invention. In the drawings:
FIG. 1 shows a view illustrating a screenshot of a user interface according to the present invention;
FIG. 2 shows a view illustrating a menu structure of a method for providing option menus of the portable phone according to the present invention;
FIG. 3 is a block diagram illustrating a typical phone implemented with a user interface according to the present invention;
FIG. 4 is a flowchart illustrating a method for providing option menus using graphic user interface according to the present invention; and
FIG. 5 is a flowchart illustrating a method for providing option menus using graphic user interface according to the present invention.

Preferred embodiments of the present invention will be described with reference to the accompanying drawings in detail. Wherever possible, the same reference numbers will be used throughout the drawing(s) to refer to the same or like parts. Detailed descriptions of well-known functions and structures incorporated herein are omitted in the interest of clarity.

In the following detailed description, only the preferred embodiment of the present invention is shown and described, simply by way of illustration of the best mode contemplated by the inventor(s) of carrying out the invention. As will be realized by an artisan of ordinary skill in the art, the invention may be modified in various respects, all without departing from the scope and spirit of the invention. Accordingly, the drawings and description are to be regarded as illustrative in nature and not restrictive.

In the graphic user interface of the present invention, a roll-up menu scheme is utilized for showing optional menus and submenus of the portable phone.

In the present invention, at least two levels of menus can be simultaneously presented on the display screen in the form of a roll-up window. The number of menu levels, i.e., the depth of the menu structure or tree, depends on the features of the respective functions provided by the portable phone. In the present invention, more than one level of menus are simultaneously displayed, such that the user can easily access a target option menu. Also, the simultaneous multilevel menu presentation enables the user to quickly select an intended option menu using a few keys like direction and volume keys, without complicated key manipulations.

In the present invention, the portable phone is used as an example for adopting the method and apparatus for providing GUI option menus, however, it is not limited to the portable phone, but can be a personal digital assistant (PDA), a laptop computer, a personal computer, an audio devices like MP3 player, a television, a digital camera and the like.

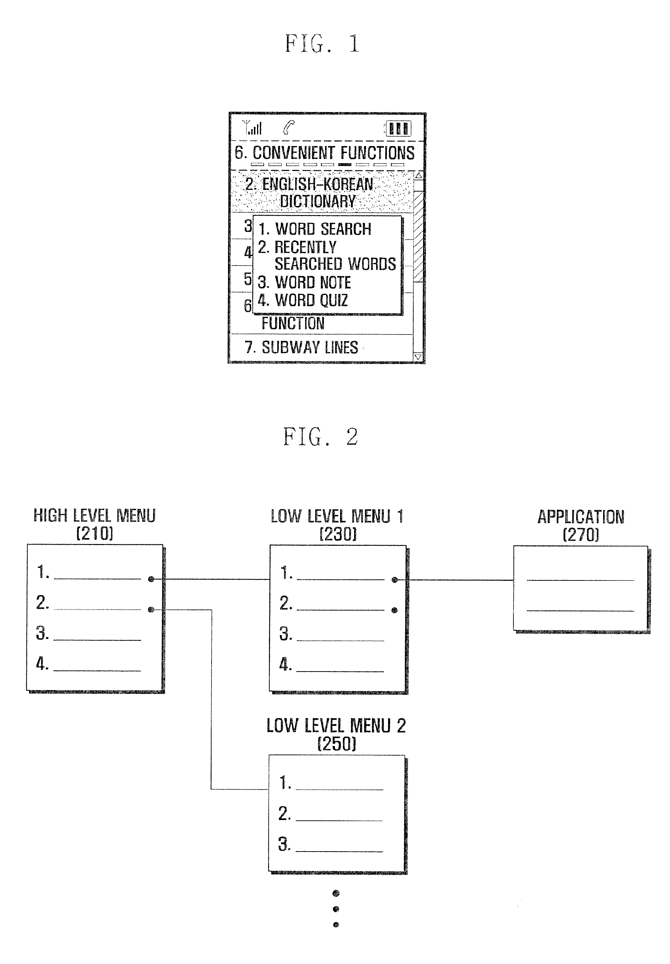

FIG. 1 shows a view illustrating a screenshot of a user interface according to the present invention.

Referring to FIG. 1, a main menu screen for an additional function of the portable phone is displayed. The additional function is entitled "convenient function" and the main menu includes several numbered main items. Selecting a corresponding item from a root menu opens the main menu. As shown in FIG. 1, if an item is selected from the main menu screen, the selected main menu item is activated and a pull-down menu is opened. The pull-down menu includes option items related to the selected main menu item. In this view, the "English-Korean Dictionary" item is selected from the main menu screen, and the "English-Korean Dictionary" item includes the numbered options: 1. word search, 2. recently searched words, 3. word note, and 4. word quiz. Accordingly, the user can select the option items using the direction keys without entering the next level menu.

The option item selection can be carried out using the direction keys, dedicated scrolling keys, or the number keys. Also, hovering between the high level menu and the lower level menu can be carried out with the direction key manipulations.

By manipulating the direction keys, an activation cursor moves from an item to another even between items belonging to different menu levels, such that the item on which the activation cursor is overlaid is highlighted.

In case that the high level menu is highlighted, it is possible to hover the activation cursor over the items belonging to the same level. If the activation cursor moves on an item of the high level menu, the lower menu associated with the high menu item is pulled down so as to list the lower menu items.

FIG. 2 shows a view illustrating a menu structure of a method for providing option menus of the portable phone according to the present invention.

As shown in FIG. 2, the menu structure consists of a main menu page 210 having several main menu items, a plurality of intermediate menu pages 230 and 250 linked to the respective main menu items, each intermediate menu page having a plurality of intermediate menu items, and a plurality of option menu pages 270 linked to the respective intermediate menu items, each option menu page having a plurality of option menu items.

Referring to FIG. 2 if the user requests the main menu , the main menu page 210 is displayed.

If a main menu item is selected from the main menu page 210, the portable phone displays the intermediate menu page linked to the selected main menu item. In order to select a menu item, the user moves the activation cursor over the menu items by manipulating predetermined keys. The key manipulation can be carried out with the navigation keys, scroll keys, volume keys, or dedicated menu selection keys.

While the activation cursor overlays a menu item, the portable phone highlights the menu item and checks for low level menu page associated with the highlighted menu. If there is a low level menu, the portable phone displays the low level menu having its items in the form of pull-down menu. For example, if the first main menu item is selected from the main menu page 210, the portable phone displays the intermediate menu page 230 associated with the first main menu item in the form of pull-down menu.

Here, the intermediate level menus are associated with the high level menu items stored in the database. Also, each intermediate level menu can likewise have intermediate level menu items associated with low level menus having low level menu items.

If an intermediate menu item is selected from the intermediate menu page 230 opened in the form of pull-down menu, a low level menu page 270 associated with the selected intermediate menu item is opened. The low menu page 270 may also be a menu having options for specific applications.

The GUI based menu structure may be implemented with a mapping structure of a flash application installed in the portable phone and the functional blocks for implementing the user interface may be implemented as a one-chip hardware module. The flash application can be included such as a flash animation, flash game, flash avatar or etc.

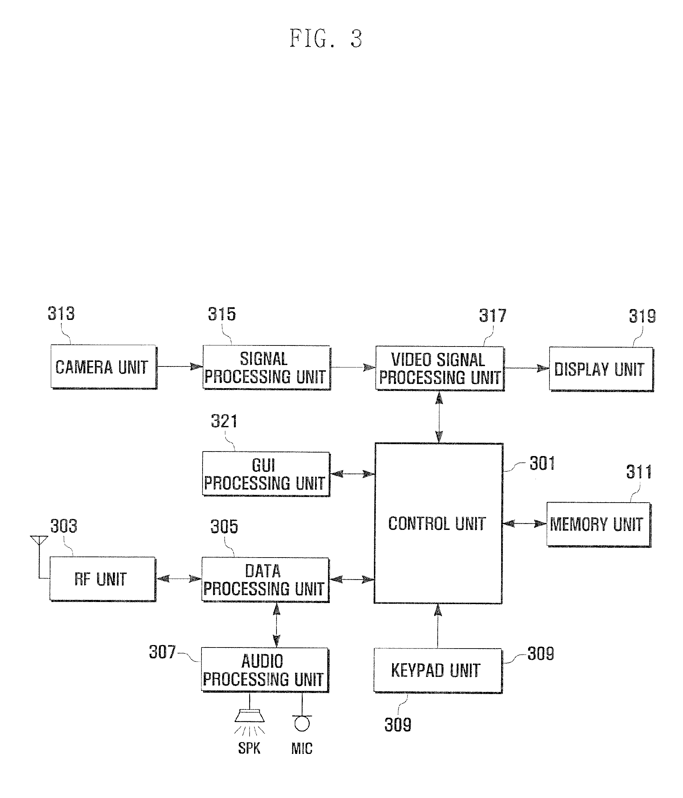

FIG. 3 is a block diagram illustrating a probable phone implemented with a user interface according to the present invention.

In FIG. 3, the portable phone includes an input component (307, 309, 313), a processing component (315, 321, 305, 301, 317), a storage component 311, an output component (319, 307), and a communication component 303.

The input component includes an audio processing unit 307 which processes audio signals interfaced through a microphone, a keypad unit 309 enabling the input of texts and commands, and a camera unit 313 for taking pictures. That is, the input component of the portable phone executes the task of receiving various data such as audio, text, and video data through these units.

The processing component includes a signal processing unit 315 which converts the analog video signals from the camera unit 313 into digital signals, a video signal processing unit 317 which processes the digital signals from the signal processing unit 315, a data processing unit 305 which processes the audio data transferred from the audio processing unit 307 and the text data input through the keypad unit 309, a control unit 301 which controls all the component and operations of the portable phone, and an GUI processing unit 321 which processes user's requests for menus and helps with the additional functions of the portable terminal. That is, the processing component processes data, such as audio, text, video data, and user's instructions input from the input components.

The storage component stores the data input from the input component, the menu structure related data, and applications associated to the menus. The storage components includes a memory unit 311.

The output component includes a display unit 319 which displays user data, menus and additional functions associated with menus. The output component includes an audio processing unit 307 which processes audio signals. That is, the output component processes data input through the input component and the storage component. The output component outputs audio and video.

The communication component includes a radio frequency (RF) unit 303 which receives radio signals from transmitters, and exchanges user data with other users through wireless channels and communicates content with a web server. Now, the operations of the elements constituting the portable phone are described in more detail.

The RF unit 303 performs wireless voice and data communications. The RF unit 303 includes an RF transmitter for up-converting and amplifying the signal to be transmitted and a low-noise RF receiver for amplifying and down converting the signal received through the antenna.

The data processing unit 305 includes means for performing encoding and modulation on the signal to be transmitted through the RF unit 303 and means for performing demodulation and decoding on the signal from the RF unit 303.

The audio processing unit 307 plays back the output audio signals from the data processing unit 305 and transfers the input audio signal from the microphone to the data processing unit 305.

The keypad unit 309 provides a plurality of input number and character keys for entering numbers and texts and various function keys to formulate instructions. The function keys include mode configuration keys for configuring the menu applications and scrolling keys for hovering across the menus.

The memory unit 311 includes program and data memory. The program memory stores the programs for controlling general operations of the portable terminal and application programs for operating the user interface. Also, the data memory includes the data generated during the operations of the programs and menus-related data in the form of database. The database menu includes a plurality of tables interrelated and each table maps the applications and their features.

The control unit 301 controls the overall operation of the portable terminal and configures the options of the additional functions in accordance with the configuration signals input through the keypad unit 309 and displays the menus featuring the options of the additional functions and user data. The control unit 301 may display the pull-down menus in a hierarchical structure.

The camera unit 313 which includes an encoder (not shown) converts the analog signals of the image into digital signals. The signal processing 315 converts the output digital signals from the camera unit 313 into video signals.

The video processing 317 processes the output video signals from the signal processing 315 so as to generate screen data to be displayed by the display unit 319. The video processing 317 processes the screen data to fit the size and characteristics of the display unit 319 and performs video compression and decompression.

The display unit 319 controls visual presentation of the output video data from the video processing unit 317. Also, the display unit 319 provides the user with pull-down graphic user interface menu having selectable options showing the information for the respective options.

The GUI processing unit 321 checks the option requested by the user and retrieves the menu and its submenus, help information, applications and displays the retrieved results on the display unit 319.

Preferably, the GUI processing unit 321 is operated with a dedicated flash application having an menu overlay module for displaying the menus on the screen, a menu recognition module for recognizing the menu overlaid with an activation cursor, a menu information extraction module for extracting the information related to the menu, and a menu management module for switching and managing the menus.

Now the operation of the hierarchical pull-down graphic user interface menu of a portable phone is described in more detail.

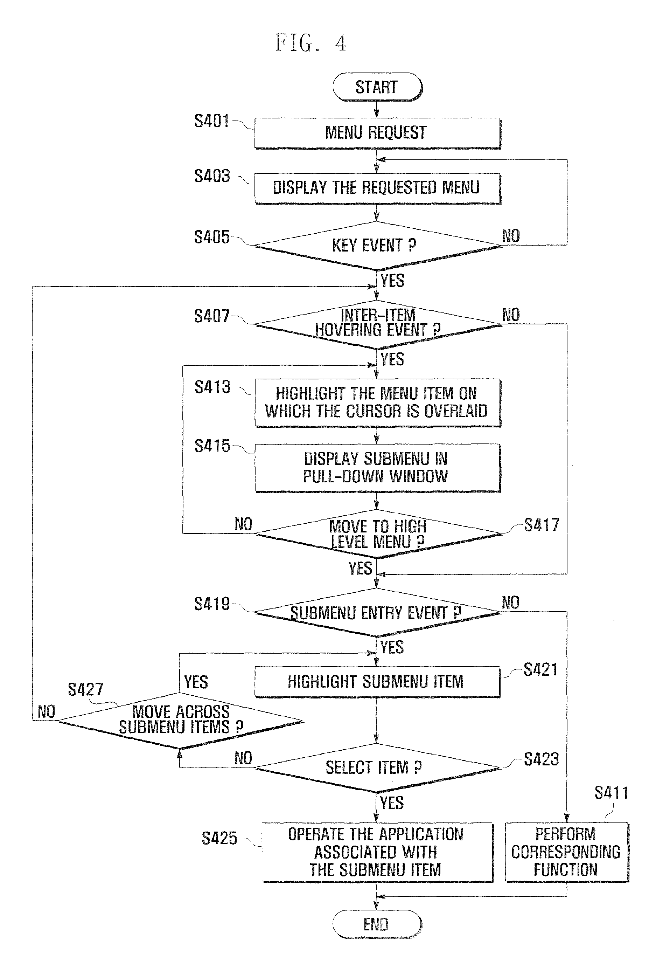

FIG. 4 is a flowchart illustrating a method for providing option menus using graphic user interface according to the present invention.

Referring to FIG. 4, once a menu is requested by the user at step 401, the portable phone displays a menu on the screen at step 403. Once the menu is displayed, an activation cursor hovers across the menu items of the menu so as to highlight the menu item on which it stays. Also, the portable phone displays the submenu in the form of pull-down menu if the highlighted menu item has any associated submenu.

While the menu is displayed, the portable phone determines whether or not a key event occurs at step 405.

If a key event occurs, the portable phone determines if the key event is a hovering event for moving across the menu items in accordance with the direction key manipulation at step 407. If it is determined that the key event is not for hovering over items, the portable phone determines if the key event is an event for entering a submenu at step 409.

If the key event is not for entering the submenu, the portable phone performs the operation corresponding to the key event at step 411. On the other hand, if the key event is a submenu entry event, the portable phone displays the submenu associated with the currently highlighted menu item at step 421.

In the meantime, if it is determined that the key event is an inter-item hovering event at step 407, the portable phone moves the activation cursor to another item intended by the user's key manipulation; the item that the activation cursor stays thereon is highlighted at step 413. Sequentially, the portable phone checks if there is any submenu associated with the currently highlighted menu item and displays the submenu in the form of a pull-down menu at step 415, if available. After displaying the pull-down submenu, the portable phone determines if another inter-item hovering event occurs at step 417. If so, the portable phone goes back to perform step 413. On the other hand, if the inter-item hovering event does not occur, the portable phone determines if the submenu entry event occurs at step 419. If it is determined that the submenu entry event occurred, the portable phone display the submenu associated with the currently highlighted menu item at step 421.

While the submenu is pulled down, the portable phone determines if there is a key input for selecting the submenu item from the pull-down submenu at step 423. If it is determined that a highlighted submenu item is selected by the user's key manipulation, the portable phone operates the application associated to the submenu item at step 425. At this time, the selected submenu item is linked to other lower submenu, the portable phone displays the lower submenu in the form of pull-down menu.

In the meantime, if the key input is not for selecting the submenu item at step 423, the portable phone determines if the key input is for hovering across the submenu items at step 427. If the key input is for hovering across the submenu items, the portable phone goes back to perform step 421. Otherwise, if the key input is not for hovering across the submenu items, the portable terminal goes back to perform step 407.

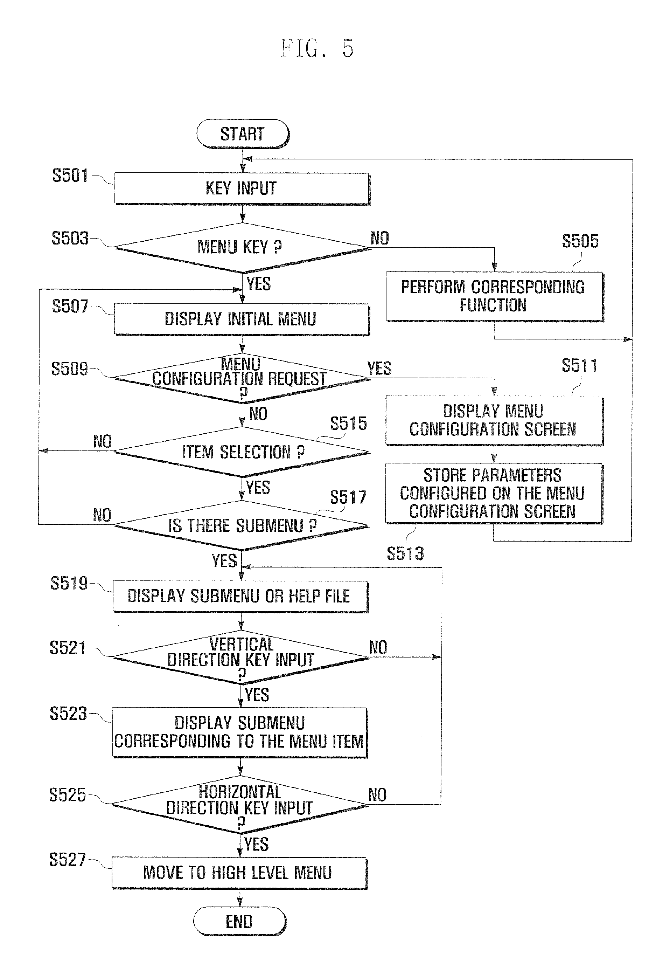

FIG. 5 is a flowchart illustrating a method for providing option menus using graphic user interface according to the present invention.

Referring to FIG. 5, once a key input is detected at step 501, the portable phone determines if the key input is for a menu request at step 503. If it is, the portable phone displays an initial menu at step 507. Otherwise, the portable phone performs the function corresponding to the key input at step 505.

While the initial menu is opened, the portable phone determines if there is a key input requesting a menu configuration at step 509. If yes, the portable phone displays a menu configuration screen so as to allow the user to configure the parameters of the menus at step 511. After the menus are configured, the portable phone stores the configured parameters at step 513. The menus of the portable phone can be configured to satisfy the user's taste.

However, if the key input is not for the menu configuration at step 509, the portable phone determines the key input is for a menu item selection at step 515. If yes, the portable phone determines if there is a submenu and/or help file associated to the selected menu item at step 517. If yes, the mobile phone display the submenu and/or the help file at step 519.

While displaying the submenu and/or the help file, the portable phone checks for an input control signal activated by clicking vertical direction keys or scrolling keys at step 521. If the input control signal is detected , the portable phone moves the activation cursor across the menu items and displays the submenu or the help file corresponding to the menu item on which the activation cursor is overlaid at step 523.

Also, the portable phone determines if there is an input control signal activated by clicking horizontal direction keys at step 525. If so, the portable phone display regards the horizontal direction key input as a request for moving to the high menu and the portable phone activates the high menu at step 527.

As described above, the method and apparatus for providing the graphic user interface of the portable phone according to the present invention allow the user to configure the menu screens to be displayed by providing the menus in the pull-down window such that the user can easily manipulate the portable phone with the enhanced menu screen.

Also, in the present invention the submenu associated with a menu item belonging to a higher menu is displayed in the form of a pull-down menu while a cursor is overlaid on the menu item, such that the user can easily and quickly find a menu item for operating an intended function.

Furthermore, because the portable phone provides shortcut paths to specific menu items for activating various functions, utilization of the portable phone is simplified in a user friendly manner resulting in the user finding the menu path quicker.

Although preferred embodiments of the present invention have been described in detail hereinabove, it should be clearly understood by an artisan of ordinary skill in the art that many variations and/or modifications of the basic inventive concepts herein taught may be made without departing from the scope of the present invention, as defined by the appended claims.

## Claims

1. A method for providing graphic user interface menu for a portable device, comprising:
displaying a menu having at least one menu item;
determining if a submenu is associated with the menu item; and
simultaneously displaying the menu and the submenu if the menu item is associated with the submenu .

2. The method of claim 1, wherein the submenu is displayed in a separate window.

3. The method of claim 1 or 2 further comprising:
determining if an inter-item movement signal is detected while the menu and the submenu are displayed; and
moving to and highlighting the menu item of the menu if the inter-item movement signal is detected.

4. The method of claim 3 further comprising:
determining if an inter-menu movement signal is detected while the menu and the submenu are displayed; and
moving to the submenu if the inter-menu movement signal is detected .

5. The method of claim 3 further comprising:
determining if an inter-menu movement signal is detected while the menu and the submenu are displayed; and
moving to the submenu and highlighting a submenu item of the submenu.

6. The method of claim 5 further comprising:
determining if there is at least one low level submenu associated with the submenu item; and
simultaneously displaying the submenu and the low level submenu if at least one low level submenu associated to the submenu item exists.

7. The method of claim 6, wherein the low level submenu is displayed in a separate window.

8. A method for providing graphic user interface menu for a portable device, comprising:
determining if a menu request signal is detected;
displaying the menu having at least one menu item if the menu request signal is detected;
determining if an item selection signal is detected;
highlighting the menu item on which a cursor is overlaid;
determining if there is at least one submenu associated with the highlighted menu item if the item selection signal is detected;
simultaneously displaying the menu and the submenu at if there is at least one submenu associated with the highlighted menu item;
determining if the submenu item selection signal is detected for selecting a submenu item; and
performing a function associated with the selected submenu item.

9. The method of claim 8 further comprising:
determining if a menu configuration request signal is detected;
displaying a menu configuration screen configuration request signal is detected; enabling the configuration of parameters related to the respective menu through the menu configuration screen; and
storing the configured parameters.

10. The method of claim 8 or 9 further comprising displaying a low level submenu associated with the submenu item on which the cursor is overlaid.

11. The method of one of claims 8 to 10 further comprising:
determining if a high-menu movement request signal is detected; and
activating the high-menu screen if the high-menu movement request signal is detected.

12. The method of claim 2 or 8, wherein the submenu is displayed in the form of a pull-down window.

13. A portable device for providing graphic user interface menu of a portable device, comprising:
a controller which controls paths through which menus are transmitted;
a display unit which displays the menus such that a submenu is overlapped on a main menu; and
a user interface processing unit which checks a menu requested by the user, retrieves submenus associated with the menu and relevant information and applications, and simultaneously provides the menu and submenus to the display unit.

14. The portable device of claim 13 further comprising a memory which stores programs for operating the user interface, data generated while operating the programs, menu related data in a form of database.

15. The portable device of claim 14, wherein the database maps the menus, applications, and user data in forms of tables.

16. The portable device of claim 14, wherein the user interface processing unit includes an menu overlay module for displaying the menus on the screen, a menu recognition module for recognizing the menu overlaid with an activation cursor, and menu information extraction module for extracting the information related to the menu, and a menu management module for switching and managing the menus.
